# DEMANDE DE BREVET EUROPEEN

(11) **EP 4 806 537 A1**
(43) Date de publication de la demande: **16.09.2026**
(21) Numéro de dépôt: 26159763.7
(22) Date de dépôt: 20.02.2026
(51) Int. Cl.: B01D 53/06, B01D 3/30, B01D 53/14, B01D 53/18, B01J 8/10

(54) **DISPOSITIF A LIT ROTATIF**

(30) Priorité: 10.03.2025 FR 2502344
(71) Demandeur: IFP Energies nouvelles, 92500 Rueil-Malmaison (FR)
(72) Inventeur: BEARD, Philippe, 92852 RUEIL-MALMAISON CEDEX (FR); LAABIDI, Samy, 92852 RUEIL-MALMAISON CEDEX (FR); MINIERE, Marine, 92852 RUEIL-MALMAISON CEDEX (FR); PENIN, Veronique, 92852 RUEIL-MALMAISON CEDEX (FR); STHEME DE JUBECOURT, Thibault, 92852 RUEIL-MALMAISON CEDEX (FR)
(74) Mandataire: IFP Energies nouvelles

(57) **Abrégé**

Il est proposé un dispositif à lit rotatif (50), comportant :
- une entrée (1) d'un premier fluide (F1),
- une entrée (2) d'un deuxième fluide (F2),
- une sortie (3) du premier fluide (F1),
- au moins une sortie (4A) du deuxième fluide (F2),
- un contacteur rotatif (5), comprenant :
-- un arbre de rotation (6),
-- un lit de garnissage (7) solidaire de l'arbre de rotation (6), configuré pour permettre un transfert de matière entre le premier fluide (F1) et le deuxième fluide (F2),
-- au moins un canal de sortie (8A) du deuxième fluide (F2), configuré pour faire circuler le deuxième fluide (F2) du lit de garnissage (7) vers ladite au moins une sortie (4A) du deuxième fluide (F2),

dans lequel le moins un canal de sortie (8A) du deuxième fluide (F2) est disposé à l'intérieur de l'arbre de rotation (6) du contacteur rotatif (5).

## Description

### Domaine technique

La présente invention se rapporte au domaine des équipements à contacteur rotatif. De tels équipements sont fréquemment utilisés en génie chimique, pour une grande variété de processus industriels.
Ces équipements permettent un transfert de matière, ou un transfert de chaleur, entre deux fluides mis en contact grâce à la dispersion réalisée par un contacteur rotatif.

### Technique antérieure

Les équipements à contacteur rotatif présentent des avantages par rapport à des équipements similaires à lit fixe. Grace à la force centrifuge subie par les fluides en raison de la rotation du lit du contacteur rotatif, l'efficacité du transfert entre les deux fluides est améliorée. Pour une même capacité de traitement, un équipement à contacteur rotatif est ainsi plus compact et plus léger qu'un équipement similaire à lit fixe. Une quantité de matériau moindre est donc employée pour sa fabrication, ce qui en fait généralement une solution plus économique et plus écologique. De plus, l'implantation est plus facile, particulièrement sur des sites où la place disponible est limitée.

Certains procédés comme la captation de CO₂ dans les effluents de combustion d'une usine, ou d'une centrale électrique thermique, réclament une capacité de traitement bien supérieure à celle des équipements à contacteur rotatif classiques. Cette augmentation de capacité peut être obtenue en augmentant simplement la taille de l'équipement. Cependant, une simple augmentation de taille d'un équipement classique conduit généralement à une perte d'efficacité, et fait perdre à l'équipement certains de ses avantages.

Il existe donc un besoin de fournir des équipements à contacteur rotatif optimisés pour une grande capacité de traitement.

### Résumé

A cette fin, l'invention propose un dispositif à lit rotatif, comportant :
- au moins une entrée d'un premier fluide,
- au moins une première entrée/sortie d'un deuxième fluide,
- au moins une sortie du premier fluide,
- au moins une deuxième entrée/sortie du deuxième fluide,
- un contacteur rotatif, comprenant :
   -- un arbre de rotation,
   -- un lit de garnissage solidaire de l'arbre de rotation, configuré pour permettre un transfert de matière et/ou un transfert de chaleur entre le premier fluide et le deuxième fluide,
   -- au moins un canal de circulation du deuxième fluide, configuré pour faire circuler le deuxième fluide du lit de garnissage vers ladite au moins une deuxième entrée/sortie du deuxième fluide, ou pour faire circuler le deuxième fluide de ladite au moins une deuxième entrée/sortie du deuxième fluide vers le lit de garnissage,
   dans lequel le moins un canal de circulation du deuxième fluide est disposé à l'intérieur de l'arbre de rotation du contacteur rotatif.

En disposant le canal de circulation du deuxième fluide à l'intérieur de l'arbre de rotation du contacteur rotatif, la perte de charge subie par l'écoulement du deuxième fluide peut être réduite. La performance du dispositif à lit rotatif est ainsi améliorée. En particulier, la capacité de traitement est augmentée, pour un même encombrement du dispositif à lit rotatif.

Les caractéristiques listées dans les paragraphes suivant peuvent être mises en œuvre indépendamment les unes des autres ou selon toutes les combinaisons techniquement possibles :
De préférence, l'arbre de rotation est creux sur au moins une partie de sa longueur, notamment sur la majorité ou l'essentiel de sa longueur, notamment sur la totalité de sa longueur. Cette caractéristique permet, notamment, un allégement et une plus grande compacité du dispositif dans son ensemble.

Selon un mode de réalisation, une partie dudit au moins un canal de circulation (notamment une majeure partie ou la totalité du canal) du deuxième fluide s'étend axialement entre le lit de garnissage et une première extrémité axiale de l'arbre de rotation . Dans ce cas ce figure, notamment, le canal de circulation présente de préférence une entrée et/ ou une sortie axiale à l'une de ses extrémités axiales.

Selon un mode de réalisation, la au moins une première entrée/sortie du deuxième fluide est une entrée, et la au moins une deuxième entrée/sortie du deuxième fluide est une sortie.
Autrement dit, le deuxième fluide est admis dans le dispositif à lit rotatif par la au moins une première entrée/sortie, et ressort du dispositif à lit rotatif par la au moins une deuxième entrée/sortie.
La au moins une première entrée/sortie est configurée pour recevoir un débit d'un deuxième fluide, et la au moins une deuxième entrée/sortie est configurée pour fournir un débit du deuxième fluide.
Le deuxième fluide circule dans le canal de circulation selon un premier sens de circulation.

Selon un autre mode de réalisation, la au moins une première entrée/sortie du deuxième fluide est une sortie, et la au moins une deuxième entrée/sortie du deuxième fluide est une entrée.
Autrement dit, le deuxième fluide est admis dans le dispositif à lit rotatif par la au moins une deuxième entrée/sortie, et ressort du dispositif à lit rotatif par la au moins une première entrée/sortie.
La au moins une deuxième entrée/sortie est configurée pour recevoir un débit du deuxième fluide, et la au moins une première entrée/sortie est configurée pour fournir un débit du deuxième fluide. Le deuxième fluide circule dans le canal de circulation selon un premier sens de circulation.
Le deuxième fluide circule dans le canal de circulation selon un deuxième sens de circulation, opposé au premier sens de circulation.

Selon un exemple de mise en œuvre, le premier fluide est un liquide. Le deuxième fluide est un gaz.

Selon un autre exemple de mise en œuvre, le premier fluide est un liquide, et le deuxième fluide est également un liquide.

On comprend par « liquide » une phase entièrement liquide, ou contenant éventuellement aussi des particules solides ou des bulles de gaz en suspension. Ce terme englobe aussi une pluralité de phases (deux par exemple) liquides immiscibles entre elles.

La circulation du premier fluide et du deuxième fluide peut être à contre-courant, c'est-à-dire selon des directions sensiblement parallèles et des sens de déplacement opposés. Les deux fluides circulent dans le lit de garnissage du contacteur rotatif selon une direction radiale.

Le au moins un canal de circulation du deuxième fluide fait circuler le deuxième fluide depuis le lit de garnissage vers la au moins une deuxième entrée/sortie du deuxième fluide.

La circulation du premier fluide et du deuxième fluide peut être de type co-courant, c'est-à-dire selon des directions sensiblement parallèles et un même sens de circulation. Les deux fluides circulent dans le lit de garnissage du contacteur rotatif selon une direction radiale.

Dans ce cas, le au moins un canal de circulation du deuxième fluide fait circuler le deuxième fluide depuis la deuxième entrée/sortie du deuxième fluide vers le lit de garnissage.

La circulation du premier fluide et du deuxième fluide peut être de type à courants croisés, c'est-à-dire selon des directions de déplacement transverses.
Le premier fluide circule dans le lit de garnissage du contacteur rotatif selon une direction radiale. Le deuxième fluide circule dans le lit de garnissage selon une direction axiale.

L'arbre de rotation est creux sur au moins une partie de sa longueur.

L'arbre de rotation comprend une surface latérale externe, et le au moins un canal de circulation du deuxième fluide est radialement interne à la surface latérale externe de l'arbre de rotation.

L'arbre de rotation comprend une surface latérale interne, et le au moins un canal de circulation du deuxième fluide est radialement délimité par la surface latérale interne de l'arbre de rotation.

Selon un aspect du dispositif à lit rotatif, une partie dudit au moins un canal de circulation du deuxième fluide s'étend axialement entre le lit de garnissage et une première extrémité axiale de l'arbre de rotation.

Selon un mode de réalisation du dispositif à lit rotatif, le au moins un canal de circulation du deuxième fluide est coaxial avec l'arbre de rotation.

Selon un mode de réalisation, le dispositif à lit rotatif comporte :
- une troisième entrée/sortie du deuxième fluide,
- un deuxième canal de circulation configuré pour faire circuler le deuxième fluide du lit de garnissage vers la troisième entrée/sortie du deuxième fluide, ou pour faire circuler le deuxième fluide de la troisième entrée/sortie vers le lit de garnissage,
et le deuxième canal de circulation est disposé à l'intérieur de l'arbre de rotation du contacteur rotatif.

L'arbre de rotation forme ainsi deux sorties distinctes pour l'écoulement du deuxième fluide. La section de passage pour l'écoulement est augmentée, ce qui permet de réduire encore davantage la perte de charge. La capacité du dispositif à lit rotatif est améliorée.

Une partie du deuxième canal de circulation du deuxième fluide s'étend axialement entre le lit de garnissage et une deuxième extrémité axiale de l'arbre de rotation.

La troisième entrée/sortie du deuxième fluide joue le même rôle que la deuxième entrée/sortie.
En d'autres termes, selon un mode de réalisation la deuxième entrée/sortie et la troisième entrée/sortie sont conjointement des entrées du deuxième fluide.
Selon un autre mode de réalisation, la deuxième entrée/sortie et la troisième entrée/sortie sont conjointement des sorties du deuxième fluide.

Selon un mode de réalisation du dispositif à lit rotatif, le deuxième canal de circulation du deuxième fluide est coaxial avec l'arbre de rotation.

Le premier canal de circulation du deuxième fluide et le deuxième canal de circulation du deuxième fluide sont en communication fluidique.

Le premier canal de circulation du deuxième fluide et le deuxième canal de circulation du deuxième fluide sont co-axiaux.

Selon un mode de réalisation, le dispositif à lit rotatif comporte :
- au moins un distributeur du premier fluide, configuré pour faire passer le premier fluide de la au moins une entrée du premier fluide au lit de garnissage, et une portion dudit au moins un distributeur du premier fluide est disposée à l'intérieur de l'arbre de rotation du contacteur rotatif.

Une portion du au moins un distributeur du premier fluide est en vis-à-vis, selon une direction radiale, avec la surface latérale interne de l'arbre de rotation.

Le au moins un distributeur comprend au moins un orifice de passage du premier fluide. Le au moins un distributeur peut comprendre un ensemble d'orifices de passage du premier fluide.

Le au moins un distributeur comprend une portion tubulaire.
Le au moins un orifice de passage du premier fluide est formé dans une paroi latérale de la portion tubulaire.

Le au moins un orifice de passage est disposé en vis-à-vis du lit de garnissage selon une direction radiale.

Les orifices de passage peuvent être décalés axialement le long de la portion tubulaire du au moins un distributeur.

Les orifices de passage peuvent être décalés angulairement sur une partie de la surface latérale de la portion tubulaire.

Selon un exemple de réalisation, l'extrémité de la portion tubulaire du au moins un distributeur du premier fluide est fermée.

Selon un autre exemple de réalisation, l'extrémité de la portion tubulaire du au moins un distributeur du premier fluide est ouverte.

Selon un mode de réalisation du dispositif à lit rotatif, la portion tubulaire du au moins un distributeur et le deuxième canal de circulation du dispositif à lit rotatif sont coaxiaux.

Le dispositif à lit rotatif peut comprendre deux distributeurs.

Les deux distributeurs sont par exemple disposés parallèlement l'un à l'autre à l'intérieur de l'arbre de rotation.

Selon un aspect du dispositif à lit rotatif, le contacteur rotatif comprend :
- deux flasques solidaires de l'arbre de rotation et s'étendant transversalement à l'arbre de rotation à distance l'un de l'autre,
- une chambre de mélange délimitée selon une direction axiale par les deux flasques, la chambre de mélange s'étendant radialement entre un diamètre intérieur et un diamètre extérieur,
le lit de garnissage étant disposé dans la chambre de mélange.

La chambre de mélange est remplie en partie par le lit de garnissage.

Les deux flasques forment un support, selon une direction axiale, pour le lit de garnissage.

Selon un aspect du dispositif à lit rotatif, la chambre de mélange comprend un bord radialement interne et un bord radialement externe, et est configurée pour permettre :
- une circulation du premier fluide depuis le bord radialement interne vers le bord radialement externe.

Selon un mode de réalisation, la chambre de mélange est configurée pour permettre une circulation du deuxième fluide depuis le bord radialement externe vers le bord radialement interne.

Selon un autre mode de réalisation, la chambre de mélange est configurée pour permettre une circulation du deuxième fluide depuis le bord radialement interne vers le bord radialement externe.

Selon un autre aspect du dispositif à lit rotatif, le contacteur rotatif comprend un ensemble de lumières de passage de fluide.

Chaque lumière de passage est configurée pour permettre conjointement un passage du premier fluide et un passage du deuxième fluide.

Selon un mode de réalisation, l'arbre de rotation du contacteur rotatif comprend une paroi latérale, et l'ensemble de lumières de passage de fluide est disposé sur une partie de la paroi latérale.

Cette configuration permet de procurer à l'arbre de rotation une rigidité élevée.

L'ensemble de lumières de passage de fluide est configuré pour permettre du passage du premier fluide du au moins un distributeur vers la chambre de mélange.

Selon un exemple de mise en œuvre, l'ensemble de lumières de passage de fluide est configuré pour permettre un passage du deuxième fluide de la chambre de mélange vers le au moins un canal de circulation du deuxième fluide.

Selon cet exemple de mise en œuvre, l'ensemble de lumières de passage de fluide est configuré pour permettre un passage du deuxième fluide de la chambre de mélange vers le deuxième canal de circulation du deuxième fluide.

Selon un autre exemple de mise en œuvre, l'ensemble de lumières de passage de fluide est configuré pour permettre un passage du deuxième fluide du au moins un canal de circulation vers la chambre de mélange.

Selon cet autre exemple de mise en œuvre, l'ensemble de lumières de passage de fluide est configuré pour permettre un passage du deuxième fluide du deuxième canal de circulation vers la chambre de mélange.

Les lumières de passage de fluide s'étendent longitudinalement selon une direction parallèle à l'axe de l'arbre de rotation.

Les lumières de passage sont réparties avec un intervalle angulaire constant sur toute la paroi latérale de l'arbre de rotation du contacteur rotatif.

Les lumières de passage ont toutes la même forme.

Le bord radialement interne de la chambre de mélange est adjacent aux lumières de passage.

Le lit de garnissage s'étend radialement depuis une partie de la paroi latérale de l'arbre de rotation vers le bord périphérique externe des flasques du contacteur rotatif.

Selon un mode de réalisation du dispositif à lit rotatif, le contacteur rotatif comprend un ensemble d'éléments de liaison reliant les flasques.

Chaque élément de liaison est solidaire de chacun des flasques, et s'étend axialement d'un flasque à l'autre flasque, parallèlement à l'axe de rotation.

La distance entre l'axe d'un élément de liaison et l'axe de l'arbre de rotation est par exemple constante.

Les éléments de liaison sont répartis sur toute la circonférence des flasques. Les éléments de liaison sont distants les uns des autres. L'espace libre entre deux éléments de liaison consécutifs forme une lumière de passage du premier fluide et du deuxième fluide. Les éléments de liaison comprennent des tiges. L'écart angulaire entre deux éléments de liaison consécutifs peut être constant.

L'arbre de rotation peut ainsi être interrompu dans la zone axialement comprise entre les deux flasques. Cette configuration permet de réduire la perte de charge.

Les flasques sont reliés mécaniquement l'un à l'autre seulement par l'ensemble d'éléments de liaison.

Le lit de garnissage s'étend radialement depuis le bord périphérique extérieur des flasques vers l'intérieur du contacteur rotatif.

Le dispositif à lit rotatif comporte une enceinte formant un support de maintien du contacteur rotatif.

L'enceinte est fixe.

L'enceinte est étanche.

Selon un mode de réalisation du dispositif à lit rotatif, l'arbre de rotation est configuré pour pivoter par rapport à l'enceinte par l'intermédiaire d'un unique palier de guidage.

L'unique palier de guidage de l'arbre de rotation est par exemple un roulement.

Le roulement comprend une bague intérieure et une bague extérieure.

Le dispositif à lit rotatif comprend un premier joint d'étanchéité et un deuxième joint d'étanchéité, les deux joints d'étanchéité étant disposés radialement entre l'arbre de rotation et l'enceinte, et étant disposés axialement de part de d'autre du palier de guidage.

Le dispositif à lit rotatif comprend un troisième joint d'étanchéité disposé axialement entre le contacteur rotatif et l'enceinte.

Le troisième joint d'étanchéité entoure le au moins un distributeur selon une direction radiale.

Le troisième joint d'étanchéité a une forme annulaire. Le troisième joint d'étanchéité comporte un orifice central entourant le au moins un distributeur selon une direction radiale.

Selon un mode de réalisation du dispositif à lit rotatif, l'arbre de rotation est radialement interne à l'unique palier de guidage.

Dans le cas où l'unique palier de guidage est un roulement, la bague extérieure de l'unique roulement est disposée dans un logement de l'enceinte.

Dans le cas où l'unique palier de guidage est un roulement, une portion radialement externe de l'arbre de rotation est disposée dans la bague intérieure de l'unique roulement.

Selon une variante de réalisation du dispositif à lit rotatif, l'arbre de rotation est radialement externe à l'unique palier de guidage.

Selon un autre mode de réalisation du dispositif à lit rotatif, l'arbre de rotation est configuré pour pivoter par rapport à l'enceinte par l'intermédiaire d'un premier palier de guidage et d'un deuxième palier de guidage.

Le premier palier de guidage et le deuxième palier de guidage peuvent être des roulements.

Le premier palier de guidage et le deuxième palier de guidage sont disposés selon une direction axiale de part et d'autre de la chambre de mélange.

Selon un mode de réalisation du dispositif à lit rotatif, l'arbre de rotation est radialement interne au premier palier de guidage.

Dans le cas où le premier palier de guidage est un roulement, la bague extérieure du premier roulement est disposée dans un premier logement de l'enceinte.

Une première portion de l'arbre de rotation est alors disposée dans la bague intérieure du premier roulement.

Selon un mode de réalisation du dispositif à lit rotatif, l'arbre de rotation est radialement interne au deuxième palier de guidage.

De même, dans le cas où le deuxième palier de guidage est un roulement, la bague extérieure du deuxième roulement est disposée dans un deuxième logement de l'enceinte.

Une deuxième portion de l'arbre de rotation est alors disposée dans la bague intérieure du deuxième roulement.

Pour chaque palier de guidage, un premier joint d'étanchéité est respectivement disposé entre une première surface latérale externe de l'arbre de rotation et une première partie de l'enceinte.

Pour chaque palier de guidage, un deuxième joint d'étanchéité est respectivement disposé entre une deuxième surface latérale externe de l'arbre de rotation et une deuxième partie de l'enceinte.

Selon un mode de réalisation du dispositif à lit rotatif, le premier palier de guidage est radialement interne à l'arbre de rotation.

Dans le cas où le premier palier de guidage est un roulement, une première portion saillante de l'enceinte est disposée dans la bague intérieure du premier roulement.

Dans le cas où le premier palier de guidage est un roulement, la bague extérieure du premier roulement est disposée dans une première portion interne de l'arbre de rotation.

Une partie de l'enceinte forme une portion du au moins un canal de circulation du deuxième fluide.

Selon un mode de réalisation du dispositif à lit rotatif, le deuxième palier de guidage est radialement interne à l'arbre de rotation.

Dans le cas où le deuxième palier de guidage est un roulement, une deuxième portion saillante de l'enceinte est disposée dans la bague intérieure du deuxième roulement.

La bague extérieure du deuxième roulement est alors disposée dans une deuxième portion interne de l'arbre de rotation.

Une partie de l'enceinte forme une portion du deuxième canal de circulation du deuxième fluide.

Un premier joint d'étanchéité est disposé entre une première portion de la surface latérale interne de l'arbre de rotation et une première partie de l'enceinte.

Un deuxième joint d'étanchéité est disposé entre une deuxième portion de la surface interne de l'arbre de rotation et une deuxième partie de l'enceinte.

Selon un mode de réalisation, la au moins une sortie du premier fluide est disposée dans une portion inférieure de l'enceinte.

Une portion inférieure de l'enceinte peut former un volume de collecte du premier fluide.

La première entrée/sortie du deuxième fluide est disposée dans une portion de l'enceinte disposée en vis d'un flasque du contacteur rotatif.

Selon un exemple de mise en œuvre du dispositif à lit rotatif, l'arbre de rotation est orienté selon une direction verticale.

Selon cet exemple, la première entrée/sortie du deuxième fluide est disposée sur une face supérieure de l'enceinte.

La au moins une sortie du premier fluide et la au moins une deuxième entrée/sortie du deuxième fluide s'étendent des plans parallèles.

La au moins une sortie du premier fluide et la au moins une deuxième entrée/sortie du deuxième fluide peuvent être coplanaires.

Selon un autre exemple de mise en œuvre du dispositif à lit rotatif, l'arbre de rotation est orienté selon une direction horizontale.

L'arbre de rotation peut former un angle quelconque avec l'axe vertical.

La première entrée/sortie du deuxième fluide est disposée sur une face latérale de l'enceinte.

La au moins une sortie du premier fluide et la au moins une deuxième entrée/sortie du deuxième fluide s'étendent dans des plans perpendiculaires.

Selon un mode de réalisation du dispositif à lit rotatif, le contacteur rotatif comprend :
- un arbre de rotation,
- un premier lit de garnissage solidaire de l'arbre de rotation, configuré pour permettre un transfert de matière ou un transfert de chaleur entre le premier fluide et le deuxième fluide,
- un deuxième lit de garnissage solidaire de l'arbre de rotation, configuré pour permettre un transfert de matière ou un transfert de chaleur entre le premier fluide et le deuxième fluide, une sortie du premier lit de garnissage étant configurée pour fournir un débit du premier fluide au deuxième lit de garnissage,
   une sortie du deuxième lit de garnissage étant configurée pour fournir un débit du deuxième fluide au premier lit de garnissage,
- un canal de circulation du deuxième fluide, configuré pour faire circuler le deuxième fluide du premier lit de garnissage vers la deuxième entrée/sortie du deuxième fluide,
et le canal de circulation du deuxième fluide est disposé à l'intérieur de l'arbre de rotation du contacteur rotatif.

Le contacteur rotatif comprend :
- une première paire de flasques solidaires de l'arbre de rotation et s'étendant transversalement à l'arbre de rotation à distance l'un de l'autre,
- une première chambre de mélange délimitée selon une direction axiale par la première paire de flasques, la première chambre de mélange s'étendant radialement entre un diamètre intérieur et un diamètre extérieur,
   le premier lit de garnissage étant disposé dans la première chambre de mélange,
- une deuxième paire de flasques solidaires de l'arbre de rotation et s'étendant transversalement à l'arbre de rotation à distance l'un de l'autre,
- une deuxième chambre de mélange délimitée selon une direction axiale par la deuxième paire de flasques, la deuxième chambre de mélange s'étendant radialement entre un diamètre intérieur et un diamètre extérieur,

le deuxième lit de garnissage étant disposé dans la deuxième chambre de mélange,
et un flasque de la deuxième paire de flasques comprend au moins un orifice de passage configuré pour permettre un passage de fluide entre le premier lit de garnissage et le deuxième lit de garnissage.

Le au moins un orifice de passage est configuré pour permettre un passage du premier fluide du premier lit de garnissage vers le deuxième lit de garnissage.

Le au moins un orifice de passage est configuré pour permettre un passage du deuxième fluide du deuxième lit de garnissage vers le premier lit de garnissage.

L'arbre de rotation est configuré pour pivoter par rapport à l'enceinte par l'intermédiaire d'un premier palier de guidage et d'un deuxième palier de guidage.

Le premier palier de guidage et le deuxième palier de guidage sont radialement internes à l'arbre de rotation.

L'invention a également pour objet toutprocédé de mise en œuvre du dispositif à lit rotatif décrit plus haut, où l'on transfère de la matière et/ou de la chaleur d'un des deux fluides vers l'autre fluide, les deux fluides étant notamment tous deux liquides (ou majoritairement liquides même s'ils peuvent contenir une phase/des particules solides ou des bulles de gaz en suspension), ou l'un étant liquide et l'autre gazeux.

Le dispositif selon l'invention a ainsi de multiples applications, dont tout type d'extractions liquide/liquide.
De façon non limitative, on peut notamment citer deux applications pour le dispositif selon la présente invention :
Une application qui intéresse l'invention, sans que l'invention s'y limite, concerne la désacidification des effluents gazeux tels que par exemple le gaz naturel, les gaz de synthèse, les fumées de combustion, les gaz de raffinerie, les gaz obtenus en queue du procédé Claus, les gaz de fermentation de biomasse. La désacidification est réalisée par lavage par une solution liquide absorbante, avec transfert du composé acide depuis l'effluent gazeux vers cette solution absorbante. La solution absorbante permet d'absorber les composés acides présents dans l'effluent gazeux, comme notamment l'hydrogène sulfuré H2S, les mercaptans, le dioxyde de carbone CO2, le dioxyde de soufre SO2, l'oxysulfure de carbone COS et le disulfure de carbone CS2. Les caractéristiques physico-chimiques de cette solution absorbante sont liées à la nature du gaz à traiter : spécification attendue sur le gaz traité, élimination sélective d'un composé acide, stabilité thermique et chimique de la solution vis à vis des différents composés présents dans l'effluent gazeux à traiter. On s'intéresse ici plus particulièrement au traitement d'effluents gazeux en vue de capter le dioxyde de carbone CO2 qu'ils contiennent, le captage du CO2 par solvant étant l'une des façons de réduire les émissions industrielles de CO2 et de limiter l'accumulation de ce gaz à effet de serre dans l'atmosphère.

L'autre application, liée à la précédente, concerne la régénération de ces liquides absorbants, par mise en contact avec, par exemple, un gaz de strippage qui va embarquer les composés acides relargués par la solution, notamment sous l'effet d'un apport thermique, avec cette fois un transfert de matière depuis la solution liquide vers un gaz ou mélange de gaz.

### Brève description des dessins

D'autres caractéristiques, détails et avantages apparaîtront à la lecture de la description détaillée ci-après, et à l'analyse des dessins annexés, sur lesquels :
[Fig. 1] est une représentation schématique, de côté et en coupe, d'un dispositif à lit rotatif selon un premier mode de réalisation,
[Fig. 2] est une représentation schématique, de côté et en coupe, d'un dispositif à lit rotatif selon un deuxième mode de réalisation,
[Fig. 3] est une représentation schématique, de côté et en coupe, d'un dispositif à lit rotatif selon un troisième mode de réalisation,
[Fig. 4] est une représentation schématique, de côté et en coupe, d'un dispositif à lit rotatif selon un quatrième mode de réalisation,
[Fig. 5] est une représentation schématique, de côté et en coupe, du contacteur rotatif d'une première variante du dispositif à lit rotatif de la figure 1,
[Fig. 6] est une représentation schématique, de côté et en coupe, du contacteur rotatif d'une deuxième variante du dispositif à lit rotatif de la figure 1,
[Fig. 7] est une représentation schématique, de côté et en coupe, d'un dispositif à lit rotatif selon un cinquième mode de réalisation,
[Fig. 8] est une représentation schématique, de côté et en coupe, d'un dispositif à lit rotatif selon un sixième mode de réalisation,
[Fig. 9] est une représentation schématique, de côté et en coupe, d'un dispositif à lit rotatif selon un septième mode de réalisation,
[Fig. 10] est une représentation schématique, de côté et en coupe, d'un dispositif à lit rotatif selon une variante du dispositif à lit rotatif de la figure 9.

### Description des modes de réalisation

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre et on peut interchanger les dénominations. Quand il est précisé qu'un dispositif comporte un élément donné, cela n'exclut pas la présence d'autres éléments dans ce dispositif.
Sur les différentes figures, l'axe Z représente la direction verticale, la flèche pointant vers le haut.
L'axe X représente un axe horizontal.

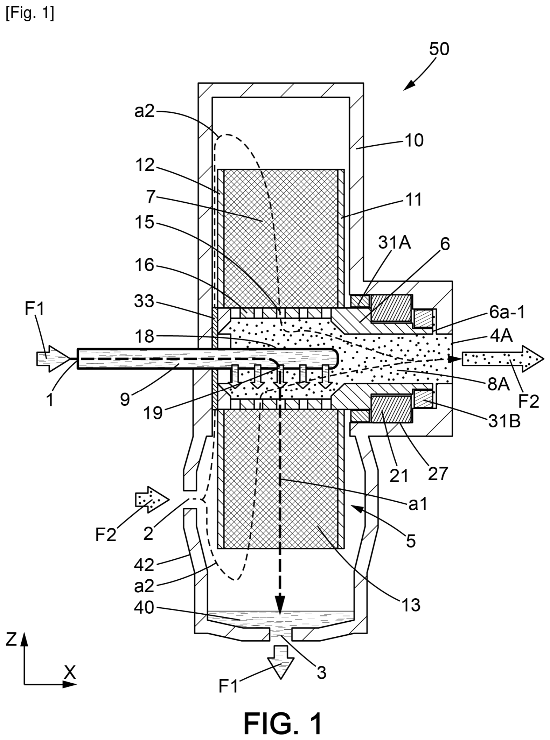

On a représenté schématiquement sur la figure 1 un dispositif à lit rotatif 50 selon un premier mode de réalisation.

Le dispositif à lit rotatif 50 comporte :
- au moins une entrée 1 d'un premier fluide F1,
- au moins une première entrée/sortie 2 d'un deuxième fluide F2,
- au moins une sortie 3 du premier fluide F1,
- au moins une deuxième entrée/sortie 4A du deuxième fluide F2,
- un contacteur rotatif 5.

Le contacteur rotatif 5 comprend :
- un arbre de rotation 6,
- un lit de garnissage 7 solidaire de l'arbre de rotation 6, configuré pour permettre un transfert de matière ou un transfert de chaleur entre le premier fluide F1 et le deuxième fluide F2,
- au moins un canal de circulation 8A du deuxième fluide F2, configuré pour faire circuler le deuxième fluide F2 du lit de garnissage 7 vers ladite au moins une deuxième entrée/sortie 4A du deuxième fluide F2, ou pour faire circuler le deuxième fluide F2 de ladite au moins une deuxième entrée/sortie 4A du deuxième fluide F2 vers le lit de garnissage 7,
et le moins un canal de circulation 8A du deuxième fluide F2 est disposé à l'intérieur de l'arbre de rotation 6 du contacteur rotatif 5.

En disposant le canal de circulation 8A du deuxième fluide F2 à l'intérieur de l'arbre de rotation 6 du contacteur rotatif 5, la perte de charge subie par l'écoulement du deuxième fluide F2 peut être réduite. Par exemple, dans une installation permettant de capter environ 50000 tonnes de CO₂ par an, ce qui correspond à un débit du deuxième fluide F2, gazeux, d'environ 30000 m³/h (mètre cube par heure),
une réduction de la perte de charge d'environ 10% peut être obtenue.
La performance du dispositif à lit rotatif 50 est ainsi améliorée. En particulier, la capacité de traitement est augmentée, pour un même encombrement du dispositif à lit rotatif 50.

Selon un premier mode de réalisation, illustré sur la figure 1, la au moins une première entrée/sortie 2 du deuxième fluide F2 est une entrée, et la au moins une deuxième entrée/sortie 4A du deuxième fluide F2 est une sortie. Autrement dit, le deuxième fluide F2 est admis dans le dispositif à lit rotatif 50 par la au moins une première entrée/sortie 2, et ressort du dispositif à lit rotatif 50 par la au moins une deuxième entrée/sortie 4A. Le canal de circulation 8A est dans ce cas un canal de sortie du deuxième fluide F2.
La au moins une première entrée/sortie 2 est configurée pour recevoir un débit d'un deuxième fluide F2, et la au moins une deuxième entrée/sortie 4A est configurée pour fournir un débit du deuxième fluide F2.
Le deuxième fluide F2 circule dans le canal de circulation 8A selon un premier sens de circulation.

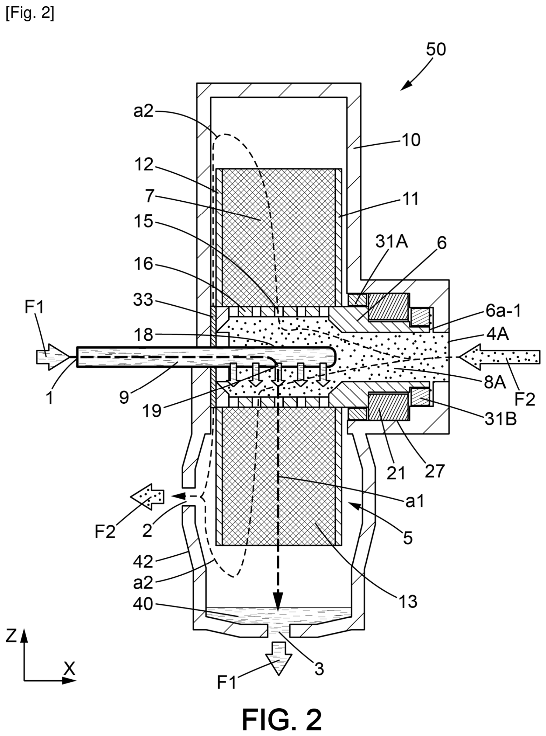

La figure 2 représente un deuxième mode de réalisation du dispositif à lit rotatif 50. Selon ce deuxième mode de réalisation, la au moins une première entrée/sortie 2 du deuxième fluide F2 est une sortie, et la au moins une deuxième entrée/sortie 4A du deuxième fluide F2 est une entrée.
Autrement dit, le deuxième fluide F2 est admis dans le dispositif à lit rotatif 50 par la au moins une deuxième entrée/sortie 4A, et ressort du dispositif à lit rotatif 50 par la au moins une première entrée/sortie 2. Le canal de circulation 8A est, selon ce mode de réalisation, un canal d'entrée du deuxième fluide F2.
La au moins une deuxième entrée/sortie 4A est ainsi configurée pour recevoir un débit du deuxième fluide F2, et la au moins une première entrée/sortie 2 est configurée pour fournir un débit du deuxième fluide F2.
Le deuxième fluide F2 circule dans le canal de circulation 8A selon un deuxième sens de circulation, opposé au premier sens de circulation.

La au moins une entrée 1 est configurée pour recevoir un débit d'un premier fluide F1.
La au moins une sortie 3 est configurée pour fournir un débit du premier fluide F1.
Le premier fluide F1 et le deuxième fluide F2 sont en contact l'un avec l'autre en circulant dans le lit de garnissage 7 du contacteur rotatif 5.
La force centrifuge générée par la rotation du contacteur rotatif 5 permet de forcer la migration du premier fluide F1 depuis la partie radialement interne du lit de garnissage 7 vers la partie radialement externe du lit de garnissage 7. La force centrifuge permet d'améliorer l'efficacité du transfert entre les deux fluides, ce qui augmente la capacité de traitement, ou permet de réduire la quantité de lit de garnissage utilisé dans le contacteur rotatif.

Selon un exemple de mise en œuvre du dispositif à lit rotatif 50, le lit de garnissage 7 permet un transfert de matière d'au moins un certain composant du deuxième fluide F2 vers le premier fluide F1.
Selon un autre exemple de mise en œuvre, le lit de garnissage 7 permet un transfert de matière d'au moins un certain composant du premier fluide F1 vers le deuxième fluide F2.

Dans le cas d'un transfert de matière, la composition chimique du premier fluide F1 évolue en circulant dans le lit de garnissage 7. De même, la composition chimique du deuxième fluide F2 évolue en circulant dans le lit de garnissage 7.
Ainsi, la composition chimique du premier fluide F1 à la sortie 3 du dispositif à lit rotatif 50 est différente de la composition chimique du premier fluide F1 à l'entrée 1 du dispositif à lit rotatif 50. De la même manière, la composition chimique du deuxième fluide F2 à la au moins une deuxième entrée/sortie 4A du dispositif à lit rotatif 50 est différente de la composition chimique du deuxième fluide F2 à la première entrée/sortie 2 du dispositif à lit rotatif 50.

Dans le cas d'un transfert de chaleur, la température du premier fluide F1 évolue en circulant dans le lit de garnissage 7. La température en sortie du premier fluide F1 diffère de la température en entrée. De même, la température du deuxième fluide F2 évolue en circulant dans le lit de garnissage 7.

Le premier fluide F1 peut comprendre des particules. Les particules peuvent être présentes dans le premier fluide F1 en entrée du dispositif à lit rotatif 50, en sortie du dispositif à lit rotatif 50, ou à la fois en entrée et en sortie du dispositif à lit rotatif 50.
De même, le deuxième fluide F2 peut aussi comprendre des particules. Comme précédemment, les particules peuvent être présentes dans le deuxième fluide F2 en entrée du dispositif à lit rotatif 50, en sortie, ou à la fois en entrée et en sortie du dispositif à lit rotatif 50.

Selon l'exemple illustré, le premier fluide F1 est un liquide. Le deuxième fluide F2 est un gaz.

Le liquide peut absorber un ou des composants chimiques contenus dans le gaz. Un exemple d'application est de la captation de CO₂ sur les fumées d'une usine. Un autre exemple d'application est l'élimination du sulfure d'hydrogène dans un effluent gazeux. Le liquide forme une solution absorbante.
Dans le cas de la captation de CO₂, le deuxième fluide F2 est un mélange gazeux contenant du CO₂. (dioxyde de carbone)
Le premier fluide F1 est par exemple une solution liquide comportant en tout ou partie un composé réactif envers le CO2, permettant de l'absorber. Ce ou ces composés réactifs peuvent être purs, dilués et sous forme de liquide ionique. Ils sont choisis parmi le groupe constitué par les amines, les alcanolamines, les azoles, les cétones, les oxames, les lactames, les enoles, les alcools, les thiols, les acides aminés, les sels alcalins d'acides aminés, les amides, les urées, les phosphates, les carbonates, les borates de métaux alcalins.
La liste suivante fournit quelques exemples de composés réactifs utilisables :
la N,N,4-triméthyl-1-pipérazinepropanamine ; la 1,2-Bis(diméthylaminoéthoxy) éthane ; la 2-[(2-hydroxyéthyl)amino]-2-méthyl-1-propanol ; la 2-[(2-hydroxypropyl)amino]-2-méthyl-1-propanol.
La solution liquide peut comporter une fraction massique du composé azoté comprise entre 10% et 100% en poids, et une fraction massique d'eau comprise entre 0% et 90% en poids, la somme des fractions massiques d'eau et du composé azoté étant supérieure ou égale à 50%.
Le deuxième fluide F2 est brut en entrée du dispositif à lit rotatif 50, et est purifié en sortie du dispositif à lit rotatif 50.
Le premier fluide F1 est pauvre en entrée du dispositif à lit rotatif, et enrichi en sortie.

Selon un autre exemple de mise en œuvre, non représenté, le premier fluide F1 est un liquide, et le deuxième fluide F2 est également un liquide.

Différents types de circulation du premier fluide F1 et du deuxième fluide F2 sont possibles. Sur les différentes figures, la ligne pointillée désignée par le signe a1 schématise le parcours du premier fluide F1. La ligne pointillée désignée par le signe a2 schématise le parcours du deuxième fluide F2. Les flèches schématisent le sens de parcours.

La circulation du premier fluide F1 et du deuxième fluide F2 peut être à contre-courant, c'est-à-dire selon des directions sensiblement parallèles et des sens de déplacement opposés.
Les deux fluides F1, F2 circulent dans le lit de garnissage 7 du contacteur rotatif 5 selon une direction radiale.

Comme représenté sur la figure 1, la première entrée/sortie 2 est dans ce cas une entrée et la deuxième entrée/sortie 4A une sortie.
Le au moins un canal de circulation 8A du deuxième fluide F2 fait circuler le deuxième fluide F2 depuis le lit de garnissage 7 vers la au moins une deuxième entrée/sortie 4A du deuxième fluide F2.

Selon un autre mode de réalisation, la circulation du premier fluide F1 et du deuxième fluide F2 peut être de type co-courant, c'est-à-dire selon des directions sensiblement parallèles et un même sens de circulation.
Les deux fluides F1, F2 circulent dans le lit de garnissage 7 du contacteur rotatif 5 selon une direction radiale.

Dans ce cas, et comme représenté sur la figure 2, la deuxième entrée/sortie 4A est une entrée et la première entrée/sortie 2 est une sortie.
Le au moins un canal de circulation 8A du deuxième fluide F2 fait circuler le deuxième fluide F2 depuis la deuxième entrée/sortie 4A du deuxième fluide F2 vers le lit de garnissage 7.

Autrement dit, le deuxième mode de réalisation diffère du premier mode de réalisation par le sens de circulation du deuxième fluide F2. La circulation du premier fluide F1 reste inchangée entre les deux modes de réalisation.

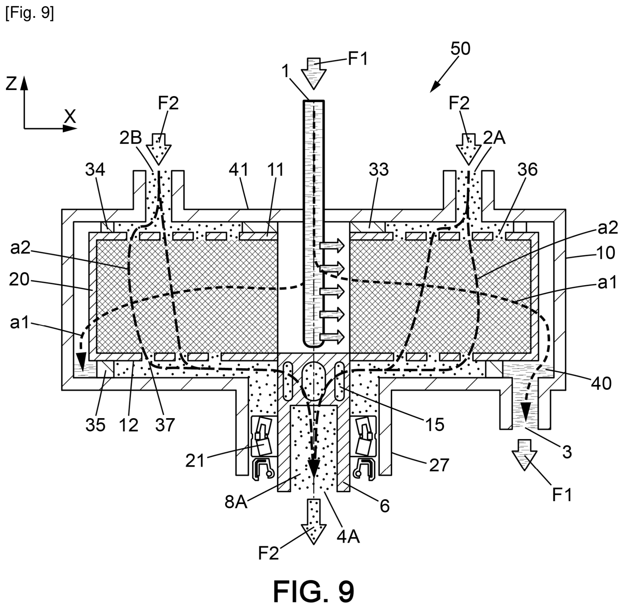

Selon un autre mode de réalisation, illustré sur la figure 9, la circulation du premier fluide F1 et du deuxième fluide F2 peut être de type à courants croisés, c'est-à-dire selon des directions de déplacement transverses, autrement dit sensiblement perpendiculaires. Le premier fluide F1 circule dans le lit de garnissage 7 du contacteur rotatif 5 selon une direction radiale, c'est-à-dire transverse à la direction de l'axe de l'arbre de rotation 6. Le deuxième fluide F2 circule dans le lit de garnissage 7 selon une direction axiale, c'est-à-dire parallèle à la direction de l'axe de l'arbre de rotation 6.
Dans ce mode de réalisation, la première entrée/sortie 2 est une entrée et la deuxième entrée/sortie 4A une sortie.

L'arbre de rotation 6 s'étend selon un axe D.
L'arbre de rotation 6 est creux sur au moins une partie de sa longueur.
L'arbre de rotation 6 comprend une surface latérale externe 6L-e, et le au moins un canal de circulation 8A du deuxième fluide F2 est radialement interne à la surface latérale externe 6L-e de l'arbre de rotation 6.

L'arbre de rotation 6 comprend une surface latérale interne 6L-i, et le au moins un canal de circulation 8A du deuxième fluide F2 est radialement délimité par la surface latérale interne 6L-i de l'arbre de rotation 6.
La surface latérale interne 6L-i de l'arbre de rotation 6 est en contact avec le deuxième fluide F2. En d'autres termes, la surface latérale interne 6L-i de l'arbre de rotation 6 forme une partie du canal de circulation 8A du deuxième fluide F2.

Une partie dudit au moins un canal de circulation 8A du deuxième fluide F2 s'étend axialement entre le lit de garnissage 7 et une première extrémité axiale 6a-1 de l'arbre de rotation 6.

Le au moins un canal de circulation 8A du deuxième fluide F2 est coaxial avec l'arbre de rotation 6.
L'arbre de rotation 6 est ainsi évidé dans sa partie la plus proche de son axe D. Le au moins un canal de circulation 8A est par exemple formé par un perçage réalisé dans l'arbre 6.

Le dispositif à lit rotatif 50 comporte une enceinte 10 formant un support de maintien du contacteur rotatif 5.
L'enceinte 10 forme un bâti par rapport auquel le contacteur rotatif 5 peut pivoter.
L'enceinte 10 est fixe.
Le premier fluide F1 et le deuxième fluide F2 circulent à l'intérieur de l'enceinte 10. L'enceinte 10 est étanche.
L'enceinte 10 contient le premier fluide F1 et le deuxième fluide F2.
L'enceinte 10 est rigide. On entend par rigide que l'enceinte 10 subit seulement des déformations élastiques, donc réversibles, lors d'une utilisation nominale du dispositif à lit rotatif 50.
L'enceinte 10 forme un volume de réception du contacteur rotatif 5.

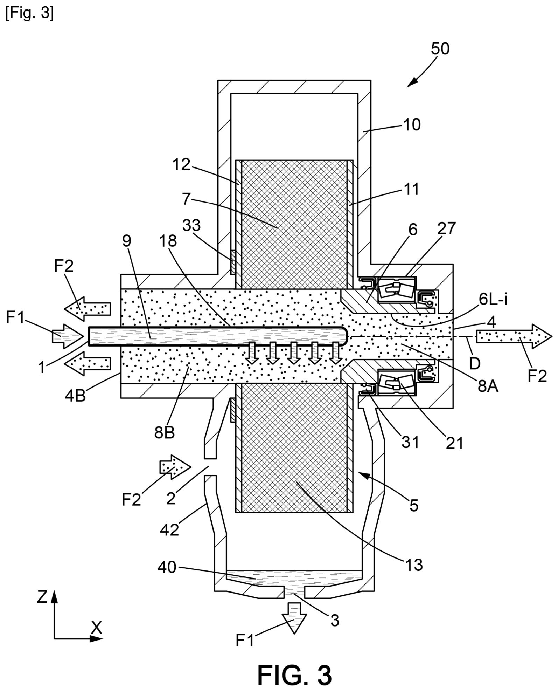

La figure 3 représente un troisième mode de réalisation, qui diffère du premier mode de réalisation par le nombre de sorties du deuxième fluide F2.

Dans ce mode de réalisation, le dispositif à lit rotatif 50 comprend une première sortie 4A disposée dans l'arbre de rotation 6, et une deuxième sortie 4B disposée dans une paroi de l'enceinte 10.

La section de passage du deuxième fluide F2 est ainsi augmentée, ce qui permet de réduire la perte de charge globale du dispositif à lit rotatif.

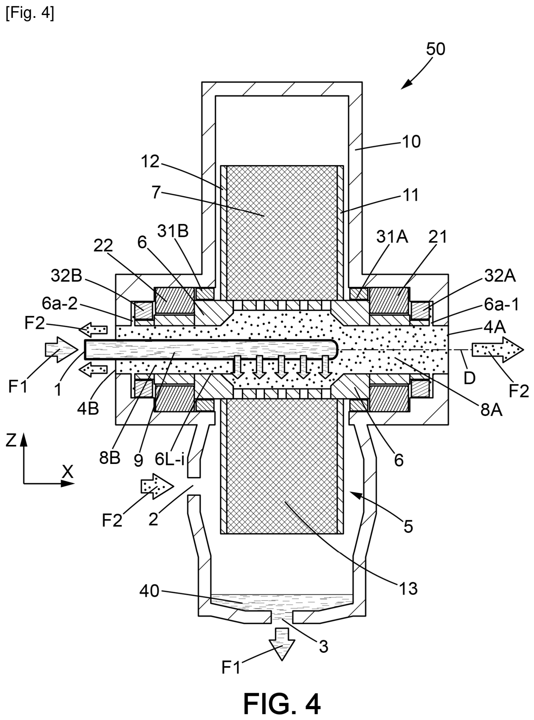

La figure 4 représente un quatrième mode de réalisation du dispositif à lit rotatif 50, qui comprend deux entrées/sorties disposées dans l'arbre.

Dans ce mode de réalisation, le dispositif à lit rotatif 50 comporte :
- une troisième entrée/sortie 4B du deuxième fluide F2,
- un deuxième canal de circulation 8B configuré pour faire circuler le deuxième fluide F2 du lit de garnissage 7 vers la troisième entrée/sortie 4B du deuxième fluide F2, ou pour faire circuler le deuxième fluide F2 de la troisième entrée/sortie 4B vers le lit de garnissage 7, et le deuxième canal de circulation 8B est disposé à l'intérieur de l'arbre de rotation 6 du contacteur rotatif 5.

L'arbre de rotation 6 forme ainsi deux sorties distinctes pour l'écoulement du deuxième fluide F2. La section de passage pour l'écoulement du deuxième fluide F2 est augmentée, ce qui permet de réduire encore davantage la perte de charge. La capacité du dispositif à lit rotatif 50 est améliorée. Pour une même capacité, son encombrement peut être réduit.

Une partie du deuxième canal de circulation 8B du deuxième fluide F2 s'étend axialement entre le lit de garnissage 7 et une deuxième extrémité axiale 6a-2 de l'arbre de rotation 6.

La deuxième extrémité axiale 6a-2 de l'arbre de rotation 6 est opposée à la première extrémité axiale 6a-1 de l'arbre de rotation 6.

La troisième entrée/sortie 4B du deuxième fluide F2 joue le même rôle que la deuxième entrée/sortie 4A.
Selon le mode de réalisation de la figure 4, la deuxième entrée/sortie 4A et la troisième entrée/sortie 4B sont toutes les deux des sorties du deuxième fluide F2.
L'arbre de rotation 6 est évidé au niveau de chacune de ses extrémités axiales, et les deux portions évidées forment une portion du canal de sortie du deuxième fluide F2.

L'arbre de rotation 6 peut être symétrique par rapport à un plan perpendiculaire à son axe D.

Selon une variante non représentée, la deuxième entrée/sortie 4A et la troisième entrée/sortie 4B peuvent être toutes les deux des entrées du deuxième fluide F2.

Selon le mode de réalisation illustré sur la figure 4, le deuxième canal de circulation 8B du deuxième fluide F2 est coaxial avec l'arbre de rotation 6.
Le premier canal de circulation 8A du deuxième fluide F2 et le deuxième canal de circulation 8B du deuxième fluide F2 sont co-axiaux.
Le premier canal de circulation 8A et le deuxième canal de circulation 8B peuvent avoir le même diamètre.

Le premier canal de circulation 8A du deuxième fluide F2 et le deuxième canal de circulation 8B du deuxième fluide F2 sont en communication fluidique.

On détaillera maintenant le dispositif permettant d'introduire le premier fluide F1, qui est ici un liquide, dans le dispositif à lit rotatif 50.

Le dispositif à lit rotatif 50 comporte au moins un distributeur 9 du premier fluide F1. Le distributeur 9 du premier fluide F1 est configuré pour faire passer le premier fluide F1 de la au moins une entrée 1 du premier fluide F1 au lit de garnissage 7. Une portion dudit au moins un distributeur 9 du premier fluide F1 est disposée à l'intérieur de l'arbre de rotation 6 du contacteur rotatif 5.
Ce cas est illustré notamment sur la figure 4.

Une portion du au moins un distributeur 9 du premier fluide F1 est en vis-à-vis, selon une direction radiale, avec la surface latérale interne 6L-i de l'arbre de rotation 6.

Le au moins un distributeur 9 comprend au moins un orifice de passage 19 du premier fluide F1.
Le premier fluide F1, admis dans le distributeur 9 au niveau de l'entrée 1, sort du distributeur 9 au niveau de l'orifice de passage 19, et s'écoule jusqu'au lit de garnissage 7.

Le au moins un distributeur 9 comprend ici une portion tubulaire 18.
Le au moins un orifice de passage 19 du premier fluide F1 est formé dans une paroi latérale de la portion tubulaire 18.
Le au moins un orifice de passage 19 est disposé en vis-à-vis du lit de garnissage 7 selon une direction radiale.

Selon l'exemple illustré, le au moins un distributeur 9 comprend un ensemble d'orifices de passage 19 du premier fluide F1.
Les orifices de passage 19 peuvent être décalés axialement le long de la portion tubulaire 18 du au moins un distributeur 9.
Les orifices de passage 19 peuvent être décalés angulairement sur une partie de la surface latérale de la portion tubulaire 18.

Par exemple, le distributeur 9 comprend plusieurs rangées d'orifices de passage 19. Chaque rangée comprend plusieurs orifices de passage décalés axialement le long de la portion tubulaire.
Les rangées sont réparties à intervalle angulaire régulier sur la portion tubulaire. Chaque rangée forme une génératrice de la portion tubulaire.
Par exemple, le distributeur 9 comprend neuf rangées d'orifices de passage, réparties avec un intervalle de 40° sur l'ensemble de la périphérie de la portion tubulaire. Chaque rangée comprend par exemple trois orifices de passage.
L'espacement entre le premier et le deuxième orifice d'une rangée est le même que l'espacement entre le deuxième orifice et le troisième orifice de cette rangée.

Selon l'exemple illustré, l'extrémité de la portion tubulaire 18 du au moins un distributeur 9 du premier fluide F1 est fermée.
Selon une variante non représentée, l'extrémité de la portion tubulaire 18 du au moins un distributeur 9 du premier fluide F1 peut être ouverte. Le distributeur 9 a alors la forme d'un tube ouvert à chacune de ses extrémités.

Le premier fluide F1 sort du distributeur 9 par l'orifice de passage 19 ou le cas échéant l'ensemble d'orifices de passage 19, et rejoint le lit de garnissage 7 du contacteur rotatif 5.

Selon l'exemple illustré, la portion tubulaire 18 du au moins un distributeur 9 et le deuxième canal de circulation 8B du dispositif à lit rotatif 50 sont coaxiaux.

La forme du distributeur 9, ainsi que le nombre et la disposition spatiale des orifices de passage 19 peuvent différer de l'exemple illustré.

Le nombre de distributeurs peut aussi varier.
Le dispositif à lit rotatif 50 peut ainsi comprendre deux distributeurs.
Les deux distributeurs sont par exemple disposés parallèlement l'un à l'autre à l'intérieur de l'arbre de rotation 6. Les deux distributeurs peuvent être disposés de manière symétrique par rapport à l'axe D de l'arbre de rotation 6.
Chaque distributeur délivre une partie du débit total du premier fluide F1.

On détaillera maintenant le contacteur rotatif 5.

Le contacteur rotatif 5 comprend :
- deux flasques 11,12 solidaires de l'arbre de rotation 6 et s'étendant transversalement à l'arbre de rotation 6 à distance l'un de l'autre,
- une chambre de mélange 13 délimitée selon une direction axiale par les deux flasques 11,12.

La chambre de mélange 13 s'étend radialement entre un diamètre intérieur di et un diamètre extérieur de. Le lit de garnissage 7 est disposé dans la chambre de mélange 13.

La chambre de mélange 13 est remplie en partie par le lit de garnissage 7.
Les deux flasques 11,12 forment un support, selon une direction axiale, pour le lit de garnissage 7.

Chaque flasque 11,12 a la forme d'un disque évidé en son centre. L'évidement est de forme circulaire et permet notamment l'insertion de l'arbre de rotation 6. Les deux flasques 11,12 sont décalés le long de l'arbre de rotation 6. Le volume délimité par les deux flasques 11,12 est rempli par le lit de garnissage 7.
Chaque flasque 11,12 comprend un dispositif de maintien du lit de garnissage 7. Ce dispositif de maintien n'a pas été représenté.
Le lit de garnissage 7 est ainsi fixe par rapport aux flasques 11, 12.

La chambre de mélange 13 comprend un bord radialement interne 13-i et un bord radialement externe 13-e, et est configurée pour permettre une circulation du premier fluide F1 depuis le bord radialement interne 13-i vers le bord radialement externe 13-e.
La force centrifuge générée par la rotation du contacteur rotatif 5 tend à faire passer le liquide F1 de la région proche de l'axe D de l'arbre de rotation 6 à la périphérie externe du lit de garnissage 7.

Selon le mode de réalisation de la figure 1 et selon les modes de réalisation des figures 3 à 7, la circulation du liquide F1 et du gaz F2 est à contre-courant.
La chambre de mélange 13 est ainsi configurée pour permettre une circulation du deuxième fluide F2 depuis le bord radialement externe 13-e vers le bord radialement interne 13-i. Le premier fluide F1 et le deuxième fluide F2 ont ainsi des sens de déplacement opposés.

Selon le mode de réalisation de la figure 2, la circulation du liquide F1 et du gaz F2 est à co-courant.
Dans ce cas, la chambre de mélange 13 est configurée pour permettre une circulation du deuxième fluide F2 depuis le bord radialement interne 13-i vers le bord radialement externe 13-e.
Le premier fluide F1 et le deuxième fluide F2 ont ainsi le même sens de déplacement à travers le lit de garnissage 7.

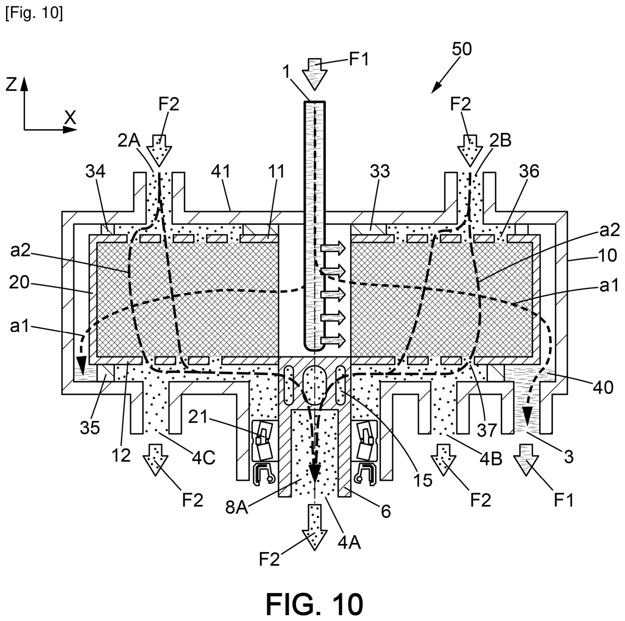

Selon le mode de réalisation des figures 9 et 10, la circulation du liquide F1 et du gaz F2 est à courants croisés. Ce mode de réalisation sera décrit ultérieurement.

Selon les modes de réalisation des figures 1 à 4, 7, ainsi que 9 et 10, la première entrée/sortie 2 du deuxième fluide F2 est disposée dans une portion de l'enceinte 10 disposée en vis d'un flasque 11 du contacteur rotatif 5.

Le contacteur rotatif 5 peut comprendre un ensemble de lumières 15 de passage de fluide.
Chaque lumière 15 de passage est configurée pour permettre conjointement un passage du premier fluide F1 et un passage du deuxième fluide F2.

Selon les modes de réalisation correspondant à une circulation à contre-courant du premier fluide F1 et du deuxième fluide F2, le premier fluide F1 et le deuxième fluide F2 traversent les lumières 15 de passage selon des sens de circulation opposés.
Selon le mode de réalisation de la figure 2, correspondant à une circulation de type co-courant, le premier fluide F1 et le deuxième fluide F2 traversent les lumières 15 de passage selon le même sens de circulation.

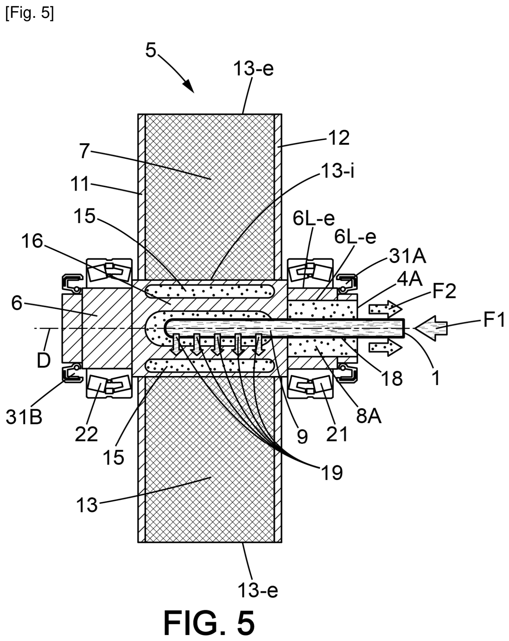

Selon les modes de réalisation des figures 1 et 2 ainsi que des figures 4 et 5, l'arbre de rotation 6 comprend une portion reliant le premier flasque 11 et le deuxième flasque 12. L'arbre de rotation 6 du contacteur rotatif 5 comprend une paroi latérale 16, et l'ensemble de lumières 15 de passage de fluide est disposé sur une partie de la paroi latérale 16.
La paroi 16 est solidaire du premier flasque 11 et du deuxième flasque 12, et relie le premier flasque 11 au deuxième flasque 12.
Cette configuration permet de procurer à l'arbre de rotation 6 une rigidité élevée, propice à un fonctionnement à un régime de rotation élevé.

L'ensemble de lumières 15 de passage de fluide est configuré pour permettre du passage du premier fluide F1 du au moins un distributeur 9 vers la chambre de mélange 13.

Selon les modes de réalisation dans lesquels la circulation des deux fluides F1, F2 est à contre-courant, l'ensemble de lumières 15 de passage de fluide est configuré pour permettre un passage du deuxième fluide F2 de la chambre de mélange 13 vers le au moins un canal de circulation 8A du deuxième fluide F2.

Selon les modes de réalisation dans lesquels le lit rotatif 5 comprend deux sorties 4A, 4B, l'ensemble de lumières 15 de passage de fluide est configuré pour permettre un passage du deuxième fluide F2 de la chambre de mélange 13 vers le deuxième canal de circulation 8B du deuxième fluide F2.

Selon les modes de réalisation dans lesquels la circulation des deux fluides F1, F2 est de type co-courant, l'ensemble de lumières 15 de passage de fluide est configuré pour permettre un passage du deuxième fluide F2 du au moins un canal de circulation 8A vers la chambre de mélange 13.

De même, pour les variantes dans lesquelles le lit rotatif 5 comprend deux entrée 4A, 4B, l'ensemble de lumières 15 de passage de fluide est configuré pour permettre un passage du deuxième fluide F2 du deuxième canal de circulation 8B vers la chambre de mélange 13.

Selon l'exemple illustré sur la figure 5, les lumières 15 de passage de fluide s'étendent longitudinalement selon une direction parallèle à l'axe de l'arbre de rotation 6.
Les lumières 15 de passage sont par exemple réparties avec un intervalle angulaire constant sur toute la paroi latérale 16 de l'arbre de rotation 6 du contacteur rotatif 5.
Les lumières 15 de passage ont, sur cet exemple, toutes la même forme.

Le bord radialement interne 13-i de la chambre de mélange 13 est adjacent aux lumières de passage 15.
Le lit de garnissage 7 s'étend radialement depuis une partie de la paroi latérale 16 de l'arbre de rotation 6 vers le bord périphérique externe des flasques 11,12 du contacteur rotatif 5.

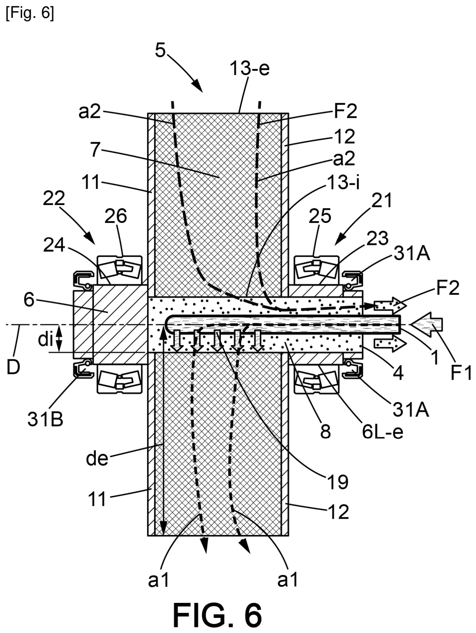

Selon le mode de réalisation de la figure 3 et selon les modes de réalisation des figures 6 à 10, l'arbre de rotation 6 est interrompu dans la zone comprise axialement entre les deux flasques 11,12.
Selon ces modes de réalisation, le contacteur rotatif 5 comprend un ensemble d'éléments de liaison 20 reliant les flasques 11,12.
Cette configuration permet d'augmenter la section de passage des deux fluides F1, F2 et ainsi de réduire la perte de charge.

Les flasques 11,12 sont reliés mécaniquement l'un à l'autre seulement par l'ensemble d'éléments de liaison 20.
Chaque élément de liaison 20 est solidaire de chacun des flasques, et s'étend axialement d'un flasque 11 à l'autre flasque 12, parallèlement à l'axe de rotation.
Les éléments de liaison 20 peuvent comprendre des tiges.
La distance entre l'axe d'un élément de liaison 20 et l'axe de l'arbre de rotation 6 est par exemple constante.

Les éléments de liaison 20 sont répartis sur toute la circonférence des flasques 11,12. Les éléments de liaison 20 sont distants les uns des autres. L'écart angulaire entre deux éléments de liaison consécutifs peut être constant.

L'espace libre entre deux éléments de liaison 20 consécutifs forme une lumière de passage du premier fluide F1 et du deuxième fluide F2.
Le lit de garnissage 7 s'étend radialement depuis le bord périphérique extérieur des flasques 11,12 vers l'intérieur du contacteur rotatif 5.

Plusieurs types de liaison mécanique entre l'arbre de rotation 6 et le contacteur rotatif 5 sont possibles.

Selon les modes de réalisation des figures 1 à 3, ainsi que selon le mode de de réalisation des figures 9 et 10, l'arbre de rotation 6 est configuré pour pivoter par rapport à l'enceinte 10 par l'intermédiaire d'un unique palier de guidage 21.

Le palier de guidage est par exemple un roulement, comme représenté sur les figures 1 et 2.
Le roulement 21 comprend une bague intérieure 23 et une bague extérieure 25.
Le roulement 21 peut être un roulement à billes, ou un roulement à rouleaux. Le roulement 21 peut comporter deux rangées de billes, ou deux rangées de rouleaux.

Comme représenté notamment sur les figures 1 et 2, le dispositif à lit rotatif 50 comprend un premier joint d'étanchéité 31A et un deuxième joint d'étanchéité 31B, les deux joints d'étanchéité 31A,31B étant disposés radialement entre l'arbre de rotation 6 et l'enceinte 10, et étant disposés axialement de part de d'autre du palier de guidage 21.
Le premier joint d'étanchéité 31A et le deuxième joint d'étanchéité 31B assure une étanchéité dynamique, c'est-à-dire une étanchéité entre une pièce fixe et un arbre pivotant par rapport à cette pièce fixe.
Les joints d'étanchéité 31A,31B isolent le palier de guidage 21 du premier fluide F1 ainsi que du deuxième fluide F2.

Selon les modes de réalisation des figures 1 à 3, ainsi que selon le mode de de réalisation des figures 9 et 10, le dispositif à lit rotatif 50 comprend un troisième joint d'étanchéité 33 disposé axialement entre le contacteur rotatif 5 et l'enceinte 10.
Le troisième joint d'étanchéité 33 entoure le au moins un distributeur 9 selon une direction radiale.
Le troisième joint d'étanchéité 33 a une forme annulaire. Le troisième joint d'étanchéité 33 comporte un orifice central entourant le au moins un distributeur 9 selon une direction radiale.

Le troisième joint d'étanchéité 33 assure une étanchéité dynamique et isole l'extérieur de l'enceinte 10 du premier fluide F1 ainsi que du deuxième fluide F2.

Selon les modes de réalisation des figures 1 à 3 ainsi que des figures 9 et 10, l'arbre de rotation 6 est radialement interne à l'unique palier de guidage 21.

Sur les figures 3, 9, 10, la bague extérieure 23 de l'unique roulement 21 est disposée dans un logement 27 de l'enceinte 10.
Une portion radialement externe de l'arbre de rotation 6 est disposée dans la bague intérieure 23 de l'unique roulement 21.

Selon une variante de réalisation du dispositif à lit rotatif 50, non représentée, l'arbre de rotation 6 est radialement externe à l'unique palier de guidage 21.

Selon les modes de réalisation des figures 4 à 8, l'arbre de rotation 6 est configuré pour pivoter par rapport à l'enceinte 10 par l'intermédiaire d'un premier palier de guidage 21 et d'un deuxième palier de guidage 22.

Le premier palier de guidage 21 et le deuxième palier de guidage 22 sont disposés selon une direction axiale de part et d'autre de la chambre de mélange 13.
Autrement dit, l'arbre de rotation 6 est maintenu par deux zones appuis, chaque zone d'appui étant disposé à proximité d'une extrémité de l'arbre.

Selon les modes de réalisation illustré sur les figures 4 à 6, l'arbre de rotation 6 est radialement interne au premier palier de guidage 21.
Sur les figures 5 et 6, le premier palier de guidage 21 est un roulement, et le deuxième palier de guidage 22 est un roulement.
La bague extérieure 25 du premier roulement 21 est disposée dans un premier logement 27 de l'enceinte 10. La bague extérieure 25 est immobilisée en rotation par rapport au premier logement 27.
Une première portion de l'arbre de rotation 6 est disposée dans la bague intérieure 23 du premier roulement 21.

Une partie de la surface latérale interne 6L-i de l'arbre de rotation 6 forme une partie du au moins un canal de sortie 8 du deuxième fluide F2.
Une partie de la surface latérale externe 6L-e de l'arbre de rotation 6 est en contact avec la bague intérieure 23 du premier roulement 21.

De même, l'arbre de rotation 6 est, sur ces exemples, radialement interne au deuxième roulement 22.
La bague extérieure 26 du deuxième roulement 22 est disposée dans un deuxième logement 28 de l'enceinte 10.
Une deuxième portion de l'arbre de rotation 6 est disposée dans la bague intérieure 24 du deuxième roulement 22.

La bague extérieure 24,26 de chaque roulement 21,22 est immobilisée en rotation par rapport à l'enceinte 10. La bague intérieure 23,25 de chaque roulement 21,22 est immobilisée en rotation par rapport à l'arbre de rotation 6.

Pour chaque palier de guidage 21,22, un premier joint d'étanchéité 31A,31B est respectivement disposé entre une première surface latérale externe de l'arbre de rotation 6 et une première partie de l'enceinte 10.
Pour chaque palier de guidage 21,22, un deuxième joint d'étanchéité 32A,32B est respectivement disposé entre une deuxième surface latérale externe de l'arbre de rotation 6 et une deuxième partie de l'enceinte 10.
Les joints d'étanchéités évite aux paliers de guidage de l'arbre de rotation 6 d'être au contact du premier fluide F1 et du deuxième fluide F2.

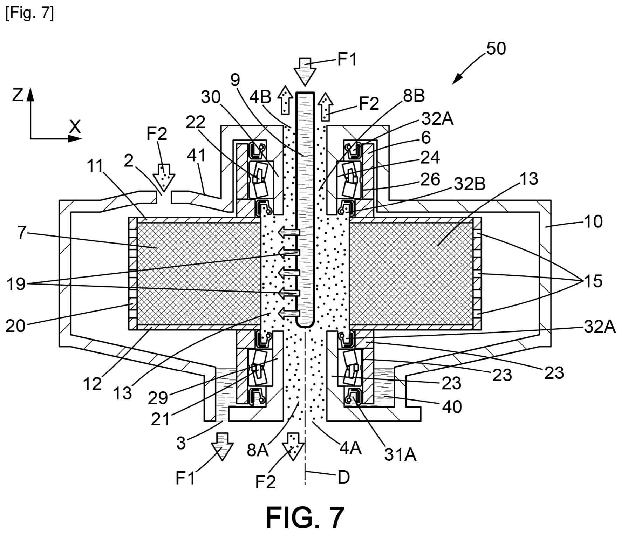

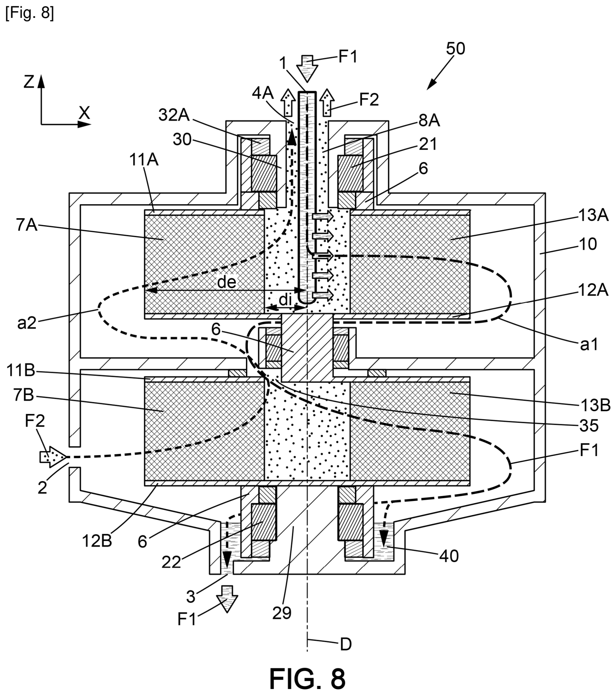

Selon les modes de réalisation des figures 7 et 8, le premier palier de guidage 21 est radialement interne à l'arbre de rotation 6.

Une première portion saillante 29 de l'enceinte 10 est disposée dans la bague intérieure 23 du premier roulement 21.
La bague extérieure 25 du premier roulement 21 est disposée dans une première portion interne de l'arbre de rotation 6.

Dans le cas des modes de réalisation des figures 7 et 8, une partie de l'enceinte 10 forme une portion du au moins un canal de circulation 8A du deuxième fluide F2.

De même, le deuxième palier de guidage 22 est radialement interne à l'arbre de rotation 6.

Une deuxième portion saillante 30 de l'enceinte 10 est disposée dans la bague intérieure 24 du deuxième roulement 22.
La bague extérieure 26 du deuxième roulement 22 est disposée dans une deuxième portion interne de l'arbre de rotation 6.

Dans le cas du mode de réalisation de la figure 8, une partie de l'enceinte 10 forme une portion du deuxième canal de circulation 8B du deuxième fluide F2.

Pour chaque roulement 21,22, la bague intérieure 23,24 du roulement 21,22 est fixe par rapport à l'enceinte 10.
Pour chaque roulement 21,22, la bague extérieure 25,26 du roulement 21,22 est disposée dans l'arbre de rotation 6 et est fixe par rapport à l'arbre de rotation 6.

Un premier joint d'étanchéité 31A,31B est disposé entre une première portion de la surface latérale interne 6L-i de l'arbre de rotation 6 et une première partie de l'enceinte 10. Un deuxième joint d'étanchéité 32A,32B est disposé entre une deuxième portion de la surface interne 6L-i de l'arbre de rotation 6 et une deuxième partie de l'enceinte 10.
Le deuxième fluide F2 est au contact de l'enceinte 10 au niveau de la zone s'étendant du joint 32A à la première sortie 4A. Le deuxième fluide F2 est également au contact de l'enceinte 10 au niveau de la zone s'étendant du joint 32B à la deuxième sortie 4B.

Selon l'exemple illustré, la au moins une sortie 3 du premier fluide F1 est disposée dans une portion inférieure de l'enceinte 10.
Lorsque le premier fluide F1 est un liquide, une portion inférieure de l'enceinte 10 forme un volume de collecte 40 du premier fluide F1.
Le volume de collecte 40 forme une zone d'accumulation de liquide. Le volume de collecte 40 communique avec la sortie 3 du premier fluide F1.

L'orientation spatiale du contacteur rotatif 5 peut varier.

Selon les modes de réalisation des figures 7 à 10, l'arbre de rotation 6 est orienté selon une direction verticale Z.
On entend que l'axe de l'arbre de rotation 6 est vertical lorsque le dispositif à lit rotatif 50 est dans une position nominale de fonctionnement.

Comme illustré sur la figure 7 et sur la figure 8, une partie de la surface externe 6L-e de l'arbre de rotation 6 peut être au contact du liquide présent dans le volume de collecte 40.
En particulier, une extrémité de l'arbre de rotation 6 peut être disposée dans le volume de collecte 40 du premier fluide F1.
Le premier joint 31A évite au premier fluide F1, sous forme liquide, de s'infiltrer dans le premier palier de guidage 21.

Selon les exemples des figures 7, 9 et 10, la première entrée/sortie 2 du deuxième fluide F2 est disposée sur une face supérieure 41 de l'enceinte 10.
La au moins une sortie 3 du premier fluide F1 et la au moins une deuxième entrée/sortie 4A du deuxième fluide F2 s'étendent des plans parallèles.
La au moins une sortie 3 du premier fluide F1 et la au moins une deuxième entrée/sortie 4A du deuxième fluide F2 peuvent être coplanaires.
La direction d'écoulement du premier fluide F1 au niveau de la au moins une sortie 3 du premier fluide F1 et la direction d'écoulement du deuxième fluide F2 au niveau de la deuxième entrée/sortie 4A sont alors parallèles.

Selon les modes de réalisation des figures 1 à 4, l'arbre de rotation 6 est orienté selon une direction horizontale X.
Comme précédemment, on entend que l'axe de l'arbre de rotation 6 est ici horizontal lorsque le dispositif à lit rotatif 50 est dans une position nominale de fonctionnement.

Selon une variante non représentée, l'arbre de rotation 6 peut former un angle quelconque avec l'axe vertical.
L'arbre de rotation 6 peut être orienté selon n'importe orientation comprise entre une orientation verticale et une orientation horizontale.

Selon l'exemple des figures 1 à 4, la première entrée/sortie 2 du deuxième fluide F2 est disposée sur une face latérale 42 de l'enceinte 10.
La au moins une sortie 3 du premier fluide F1 et la au moins une deuxième entrée/sortie 4A du deuxième fluide F2 s'étendent, selon cet exemple, dans des plans perpendiculaires. Le liquide accumulé dans le volume de collecte 40 n'est pas au contact du contacteur rotatif 5.

Le sixième mode de réalisation, illustré sur la figure 8, illustre un dispositif à lit rotatif comprenant deux lits de garnissage étagés.

Selon ce mode de réalisation, le contacteur rotatif 5 comprend :
- un arbre de rotation 6,
- un premier lit de garnissage 7A solidaire de l'arbre de rotation 6, configuré pour permettre un transfert de matière ou un transfert de chaleur entre le premier fluide F1 et le deuxième fluide F2,
- un deuxième lit de garnissage 7B solidaire de l'arbre de rotation 6, configuré pour permettre un transfert de matière ou un transfert de chaleur entre le premier fluide F1 et le deuxième fluide F2.

Une sortie du premier lit de garnissage 7A est configurée pour fournir un débit du premier fluide F1 au deuxième lit de garnissage 7B, et une sortie du deuxième lit de garnissage 7B est configurée pour fournir un débit du deuxième fluide F2 au premier lit de garnissage 7A. Le contacteur rotatif 5 comprend un canal de circulation 8A du deuxième fluide F2, configuré pour faire circuler le deuxième fluide F2 du premier lit de garnissage 7A vers la deuxième entrée/sortie 4A du deuxième fluide F2,
et le canal de circulation 8A du deuxième fluide F2 est disposé à l'intérieur de l'arbre de rotation 6 du contacteur rotatif 5.

Le premier fluide F1 traverse successivement le premier lit de garnissage 7A puis le deuxième lit de garnissage 7B. La deuxième fluide F2 traverse successivement le deuxième lit de garnissage 7B puis le premier lit de garnissage 7A.
L'utilisation de deux lits de garnissage permet d'améliorer le transfert de matière, ou le cas échéant le transfert de chaleur, entre les deux fluides F1, F2.
Le contacteur rotatif 5 comprend un premier lit de garnissage 7A et un deuxième lit de garnissage 7B rigidement lié au premier lit de garnissage 7A. Le premier lit de garnissage 7A est maintenu par deux flasques 11A, 11B. Le deuxième lit de garnissage 7B est maintenu par deux flasques 12A, 12B.
Le flasque 12A du premier lit de garnissage 7A est relié au flasque 11B du deuxième lit de garnissage 7B par une portion de l'arbre de rotation 6.
Le flasque 11B du deuxième lit de garnissage 7B comprend au moins une ouverture de passage 35B, de préférence un ensemble d'ouvertures de passage 35B.
Le premier lit de garnissage 7A et le deuxième lit de garnissage 7B peuvent avoir les mêmes dimensions.

Le premier fluide F1 sort du distributeur 9, et circule dans le premier lit de garnissage 7A et ressort par la périphérie du premier lit de garnissage 7A. Le premier fluide F1 rejoint ensuite le deuxième lit de garnissage 7B, en passant par les orifices de passage 35 du flasque 11B. Le premier fluide F1 circule ensuite dans le deuxième lit de garnissage 7B, et rejoint la sortie 3.
La deuxième fluide F2 est admis par l'entrée 2, traverse le deuxième lit de garnissage 7B et ressort par les ouvertures de passage 35. Le deuxième fluide F2 rejoint ensuite le bord périphérique externe du premier lit de garnissage 7A, circule dans le premier lit de garnissage 7A, rejoint le premier canal de circulation 8A et ressort par la sortie 4A.

Le contacteur rotatif 5 comprend :
- une première paire de flasques 11A,12A solidaires de l'arbre de rotation 6 et s'étendant transversalement à l'arbre de rotation 6 à distance l'un de l'autre,
- une première chambre de mélange 13A délimitée selon une direction axiale par la première paire de flasques 11A,12A, la première chambre de mélange 13A s'étendant radialement entre un diamètre intérieur et un diamètre extérieur, le premier lit de garnissage 7A étant disposé dans la première chambre de mélange 13A.

Le contacteur rotatif 5 comprend :
- une deuxième paire de flasques 11B,12B solidaires de l'arbre de rotation 6 et s'étendant transversalement à l'arbre de rotation 6 à distance l'un de l'autre,
- une deuxième chambre de mélange 13B délimitée selon une direction axiale par la deuxième paire de flasques 11B,12B, la deuxième chambre de mélange 13B s'étendant radialement entre un diamètre intérieur et un diamètre extérieur, le deuxième lit de garnissage 7B étant disposé dans la deuxième chambre de mélange 13B.

Un flasque 11B de la deuxième paire de flasques 11B, 12B comprend au moins un orifice de passage 35 configuré pour permettre un passage de fluide entre le premier lit de garnissage 7A et le deuxième lit de garnissage 7B.

Le au moins un orifice de passage 35 est configuré pour permettre un passage du premier fluide F1 du premier lit de garnissage 7A vers le deuxième lit de garnissage 7B. Le au moins un orifice de passage 35 est configuré pour permettre un passage du deuxième fluide F2 du deuxième lit de garnissage 7B vers le premier lit de garnissage 7A.

Le canal de circulation 8A est ici un canal de sortie permettant de fournir un débit du deuxième fluide F2.

L'arbre de rotation 6 est configuré pour pivoter par rapport à l'enceinte 10 par l'intermédiaire d'un premier palier de guidage 21 et d'un deuxième palier de guidage 22. Le premier palier de guidage 21 et le deuxième palier de guidage 22 sont radialement interne à l'arbre de rotation 6.

La figure 9 décrit un mode de réalisation dans lequel la circulation du premier fluide F1 et du deuxième fluide F2 est à courant croisés.

La circulation du premier fluide F1 s'effectue, comme précédemment, selon une direction radiale, et la circulation du deuxième fluide F2 s'effectue selon une direction axiale.

Dans ce mode de réalisation, le dispositif de lit rotatif 50 comprend deux entrées 2A, 2B du premier fluide F1. Les deux entrées 2A, 2B sont disposées sur la face supérieure 41 de l'enceinte 10.

Les deux entrées 2A, 2B sont en vis-à-vis avec un premier flasque 11 du contacteur rotatif 5.

Le flasque 11 comprend un ensemble d'ouvertures de passage 36 permettant l'admission du deuxième fluide F2 dans le lit de garnissage 7.

Le flasque 12 comprend également une série d'ouvertures de passage 37, permettant la sortie du deuxième fluide F2 du lit de garnissage 7.

Le deuxième fluide F2 sortant du lit de garnissage 7 après avoir été au contact avec le premier fluide F1 rejoint le volume entourant l'arbre de rotation 6, passe à travers les lumières 15 de passage de l'arbre de rotation 6, circule dans le canal de circulation 8A et rejoint la sortie 4A disposée dans l'arbre de rotation 6.

Un joint d'étanchéité 33 est disposé entre le premier flasque 11 et l'enceinte 10, au niveau du bord radialement interne du premier flasque 11.

Un joint d'étanchéité 34 est disposé entre le premier flasque 11 et l'enceinte 10, au niveau du bord radialement externe du premier flasque 11.

Un joint d'étanchéité 35 est disposé entre le deuxième flasque 12 et l'enceinte 10, au niveau du bord radialement externe du deuxième flasque 12.

Les joints d'étanchéité 34, 35 évitent que le deuxième fluide F2 puisse passer d'une des entrées 2A, 2B à la sortie 4A sans circuler dans le lit de garnissage 7 du contacteur rotatif 5.

Dans ce mode de réalisation, l'arbre de rotation 6 est guidé dans l'enceinte 10 par un unique palier de guidage 21 disposé dans la partie inférieure de l'enceinte 10. Le palier de guidage est ici un roulement.

La figure 10 représente une variante du septième mode de réalisation.

Cette variante diffère du septième mode de réalisation par le nombre de sorties du deuxième fluide F2. L'enceinte 10 comprend une deuxième sortie 4B du deuxième fluide F2, ainsi qu'une troisième sortie 4C.

Le débit de sortie du deuxième fluide F2 est ainsi réparti entre la sortie 4A disposée dans l'arbre de rotation 6, et les deux sorties 4B, 4C disposées dans l'enceinte 10.

D'autres modes de réalisation et variantes, non représentés, peuvent être réalisés. En particulier, le dispositif à lit rotatif peut comprendre plusieurs sorties du premier fluide F1. Le dispositif à lit rotatif peut comprendre plus de deux lits de garnissage.

### Exemple

Le dispositif à lit rotatif proposé peut être mis en œuvre pour capter 1 million de tonnes par an de CO₂ issu de fumées de combustion d'une centrale à charbon, la fumée de combustion contenant 13% de CO₂. Le contacteur rotatif est configuré pour permettre 90% de captage. Le CO₂ est par exemple capté par un solvant constitué de 40% de MDEA et 5% de pipérazine complété avec de l'eau. Le solvant liquide et les fumées de combustions sont mis en œuvre à contre-courant dans le contacteur rotatif.

Selon la configuration présentant une seule sortie dans l'arbre, comme représenté sur la figure 1, la perte de charge entre le bord radialement interne du lit de garnissage et la sortie 4A représente environ 20% de la perte de charge totale du dispositif à lit rotatif.

Selon la configuration présentant deux sorties dans l'arbre, comme représenté sur la figure 3, la perte de charge entre le bord radialement interne du lit de garnissage et les sorties 4A,4B représente environ 7% de la perte de charge totale du dispositif à lit rotatif.

Ainsi, la configuration à deux sorties dans l'arbre permet de réduire d'environ 70% la perte de charge entre le centre du dispositif à lit rotatif et les sorties de gaz, par rapport à la configuration à une seule sortie dans l'arbre. L'utilisation d'un ventilateur moins puissant en amont du dispositif à lit rotatif est ainsi possible, ce qui permet de réduire la consommation électrique du ventilateur, ainsi que son cout. Une réduction d'environ 15% de la consommation électrique et de 5% du coût a été obtenue. A l'échelle d'une installation globale de captage de CO₂ incluant une régénération du solvant, la consommation électrique peut ainsi être réduite d'environ 4%.

## Revendications

1. Dispositif à lit rotatif (50), comportant :
- au moins une entrée (1) d'un premier fluide (F1),
- au moins une première entrée/sortie (2) d'un deuxième fluide (F2),
- au moins une sortie (3) du premier fluide (F1),
- au moins une deuxième entrée/sortie (4A) du deuxième fluide (F2),
- un contacteur rotatif (5), comprenant :
-- un arbre de rotation (6),
-- un lit de garnissage (7) solidaire de l'arbre de rotation (6), configuré pour permettre un transfert de matière et/ou un transfert de chaleur entre le premier fluide (F1) et le deuxième fluide (F2),
-- au moins un canal de circulation (8A) du deuxième fluide (F2), configuré pour faire circuler le deuxième fluide (F2) du lit de garnissage (7) vers ladite au moins une deuxième entrée/sortie (4A) du deuxième fluide (F2), ou pour faire circuler le deuxième fluide (F2) de ladite au moins une deuxième entrée/sortie (4A) du deuxième fluide (F2) vers le lit de garnissage (7),
dans lequel le moins un canal de circulation (8A) du deuxième fluide (F2) est disposé à l'intérieur de l'arbre de rotation (6) du contacteur rotatif (5).

2. Dispositif à lit rotatif (50) selon la revendication précédente, dans lequel l'arbre de rotation (6) est creux sur au moins une partie de sa longueur, notamment sur la majorité ou l'essentiel de sa longueur, notamment sur la totalité de sa longueur.

3. Dispositif à lit rotatif (50) selon la revendication 1 ou 2, dans lequel une partie dudit au moins un canal de circulation (8A) du deuxième fluide (F2) s'étend axialement entre le lit de garnissage (7) et une première extrémité axiale (6a-1) de l'arbre de rotation (6).

4. Dispositif à lit rotatif (50) selon la revendication précédente, dans lequel le canal de circulation (8A) présente une entrée et/ ou une sortie axiale à l'une de ses extrémités axiales.

5. Dispositif à lit rotatif (50) selon l'une des revendications précédentes comportant :
- une troisième entrée/sortie (4B) du deuxième fluide (F2),
- un deuxième canal de circulation (8B) configuré pour faire circuler le deuxième fluide (F2) du lit de garnissage (7) vers la troisième entrée/sortie (4B) du deuxième fluide (F2), ou pour faire circuler le deuxième fluide (F2) de la troisième entrée/sortie (4B) vers le lit de garnissage (7),
dans lequel le deuxième canal de circulation (8B) est disposé à l'intérieur de l'arbre de rotation (6) du contacteur rotatif (5).

6. Dispositif à lit rotatif (50) selon la revendication précédente, dans lequel une partie du deuxième canal de circulation (8B) du deuxième fluide (F2) s'étend axialement entre le lit de garnissage (7) et une deuxième extrémité axiale (6a-2) de l'arbre de rotation (6).

7. Dispositif à lit rotatif (50) selon l'une des revendications précédentes, comportant :
- au moins un distributeur (9) du premier fluide (F1), configuré pour faire passer le premier fluide (F1) de ladite au moins une entrée (1) du premier fluide (F1) au lit de garnissage (7), dans lequel une portion dudit au moins un distributeur (9) du premier fluide (F1) est disposée à l'intérieur de l'arbre de rotation (6) du contacteur rotatif (5).

8. Dispositif à lit rotatif (50) selon la revendication précédente, dans lequel ledit au moins un distributeur (9) comprend une portion tubulaire (18), et
dans lequel la portion tubulaire (18) dudit au moins un distributeur (9) et le deuxième canal de circulation (BB) du dispositif à lit rotatif (50) sont coaxiaux.

9. Dispositif à lit rotatif (50) selon l'une des revendications précédentes, dans lequel le contacteur rotatif (5) comprend :
- deux flasques (11,12) solidaires de l'arbre de rotation (6) et s'étendant transversalement à l'arbre de rotation (6) à distance l'un de l'autre,
- une chambre de mélange (13) délimitée selon une direction axiale par les deux flasques (11,12), la chambre de mélange (13) s'étendant radialement entre un diamètre intérieur (di) et un diamètre extérieur (de),
le lit de garnissage (7) étant disposé dans la chambre de mélange (13),
dans lequel le contacteur rotatif (5) comprend un ensemble de lumières (15) de passage de fluide.

10. Dispositif à lit rotatif (50) selon la revendication précédente, dans lequel l'arbre de rotation (6) du contacteur rotatif (5) comprend une paroi latérale (16), et l'ensemble de lumières (15) de passage de fluide est disposé sur une partie de la paroi latérale (16).

11. Dispositif à lit rotatif (50) selon la revendication 9, dans lequel le contacteur rotatif (5) comprend un élément de liaison (20) reliant les flasques (11,12).

12. Dispositif à lit rotatif (50) selon l'une des revendications précédentes, comportant une enceinte (10) formant un support de maintien du contacteur rotatif (5).

13. Dispositif à lit rotatif (50) selon la revendication précédente, dans lequel l'arbre de rotation (6) est configuré pour pivoter par rapport à l'enceinte (10) par l'intermédiaire d'un unique palier de guidage (21),
et dans lequel l'arbre de rotation (6) est radialement interne à l'unique palier de guidage (21).

14. Dispositif à lit rotatif (50) selon la revendication 12 en combinaison avec la revendication 9, dans lequel l'arbre de rotation (6) est configuré pour pivoter par rapport à l'enceinte (10) par l'intermédiaire d'un premier palier de guidage (21) et d'un deuxième palier de guidage (22),
le premier palier de guidage (21) et le deuxième palier de guidage (22) étant disposés selon une direction axiale de part et d'autre de la chambre de mélange (13).

15. Dispositif à lit rotatif (50) selon la revendication précédente, dans lequel :
- l'arbre de rotation (6) est radialement interne au premier palier de guidage (21), et
- l'arbre de rotation (6) est radialement interne au deuxième palier de guidage (22).

16. Dispositif à lit rotatif (50) selon la revendication 14, dans lequel :
- le premier palier de guidage (21) est radialement interne à l'arbre de rotation (6), et
- le deuxième palier de guidage (22) est radialement interne à l'arbre de rotation (6).

17. Dispositif à lit rotatif (50) selon l'une des revendications précédentes, dans lequel le contacteur rotatif (5) comprend :
- un arbre de rotation (6),
- un premier lit de garnissage (7A) solidaire de l'arbre de rotation (6), configuré pour permettre un transfert de matière et/ou un transfert de chaleur entre le premier fluide (F1) et le deuxième fluide (F2),
- un deuxième lit de garnissage (7B) solidaire de l'arbre de rotation (6), configuré pour permettre un transfert de matière et/ou un transfert de chaleur entre le premier fluide (F1) et le deuxième fluide (F2),
dans lequel une sortie du premier lit de garnissage (7A) est configurée pour fournir un débit du premier fluide (F1) au deuxième lit de garnissage (7B), et
dans lequel une sortie du deuxième lit de garnissage (7B) est configurée pour fournir un débit du deuxième fluide (F2) au premier lit de garnissage (7A),
- un canal de circulation (8A) du deuxième fluide (F2), configuré pour faire circuler le deuxième fluide (F2) du premier lit de garnissage (7A) vers la deuxième entrée/sortie (4A) du deuxième fluide (F2),
dans lequel le canal de circulation (8A) du deuxième fluide (F2) est disposé à l'intérieur de l'arbre de rotation (6) du contacteur rotatif (5).

18. Procédé de mise en œuvre du dispositif à lit rotatif selon l'une des revendications précédentes, **caractérisé en ce qu'**on transfère de la matière et/ou de la chaleur d'un des deux fluides vers l'autre fluide, les deux fluides étant notamment tous deux liquides ou l'un étant liquide et l'autre gazeux.
